# EUROPÄISCHE PATENTSCHRIFT

(11) **EP 4 077 899 B1**
(45) Veröffentlichungstag und Bekanntmachung des Hinweises auf die Patenterteilung: **11.06.2025**
(21) Anmeldenummer: 21704411.4
(22) Anmeldetag: 22.01.2021
(51) Int. Cl.: F02C 3/30, F02C 7/052, F02C 7/055, F02C 7/143

(54) **GASTURBINE, VERFAHREN ZUM BETREIBEN EINER GASTURBINE SOWIE VERFAHREN ZUR VERÄNDERUNG EINER GASTURBINE**
GAS TURBINE, METHOD FOR OPERATING A GAS TURBINE AND METHOD FOR MODIFYING A GAS TURBINE
TURBINE À GAZ, PROCÉDÉ DE FONCTIONNEMENT D'UNE TURBINE À GAZ ET PROCÉDÉ DE MODIFICATION D'UNE TURBINE À GAZ

(30) Priorität: 25.02.2020 DE 102020202414
(43) Veröffentlichungstag der Anmeldung: 26.10.2022
(73) Patentinhaber: Siemens Energy Global GmbH & Co. KG, 81739 München (DE)
(72) Erfinder: BLUM, Oliver, 81373 München (DE); KAUF, Michael, 91058 Erlangen (DE); KNABE, Christopher, Dubai (AE)
(86) Internationale Anmeldenummer: PCT/EP2021/051471
(87) Internationale Veröffentlichungsnummer: WO 2021/170318

(56) Entgegenhaltungen:
- US-A- 5 463 873
- US-A1- 2004 163 536
- US-A1- 2008 098 890
- US-A1- 2008 098 891

## Beschreibung

Die Erfindung betrifft eine Gasturbine mit Kühlvorrichtung und weitere Verfahren.

Gasturbinen saugen Luft an und verdichten diese im Kompressor, um diese komprimierte Luft einer Verbrennung zuzuführen. Die Luft wird über ein Ansauggehäuse von der Umgebung angesaugt.

Gasturbinen mit einer Kühlvorrichtung nach dem Stand der Technik sind aus den Dokumenten US 2008/098891 und US 2004/163536 bekannt.

Zur Erhöhung der Leistung wird im Stand der Technik innerhalb des Ansauggehäuses nach dem Filter Wasser eingesprüht, um die Leistung zu erhöhen.

Dies ist aufwändig und insbesondere schwierig nachzurüsten, falls die Wassereindüsung anfangs nicht vorgesehen war.

Es ist daher Aufgabe der Erfindung oben genanntes Problem zu lösen.

Die Aufgabe wird gelöst durch eine Gasturbine nach Anspruch 1 und Verfahren nach Anspruch 7 und 10.

In den Unteransprüchen sind weitere vorteilhafte Maßnahmen aufgelistet, die beliebig miteinander kombiniert werden können, um weitere Vorteile zu erzielen.

Es zeigen
- Figur 1: schematisch die Anordnung der Erfindung mit einem Teil des Ansauggehäuses,
- Figuren 2 bis 5: weitere Ausführungen der Erfindung,
- Figur 6: eine Gasturbine.

Durch die Verdampfung des Wassers, das angesaugt wird, kommt es zur Kühlung und damit zu einer Erhöhung der volumenspezifischen Masse (Dichte) der Ansaugluft. Dies führt aufgrund des gestiegenen Sauerstoffmassenstroms zu einer größeren Verbrennungsleistung und damit zu einem Anstieg der Leistung der Gasturbine.

Der Vorteil der Erfindung liegt darin, dass die Kühlvorrichtung außerhalb eines Filterhauses angeordnet wird bzw. ist. Somit gibt es die Möglichkeit, über die Zuschaltung der Kühlung mit einem Knopfdruck eine bis zu 17%ige Leistungssteigerung zu erzielen in Abhängigkeit von der Luftansaugtemperatur.

Mittels der Kühlvorrichtung kann auch normales, sauberes Wasser, also Trinkwasser verwendet werden, das nicht speziell für den Gebrauch der Kühlvorrichtung aufbereitet werden muss.

Die Kühlvorrichtung bzw. das Verfahren zur Kühlung kann auch mit dem "Wet compression"-Prinzip (Nassverdichtung) der Gasturbine kombiniert betrieben werden.

Außerdem kann die Kühlvorrichtung für Gasturbinen verschiedener Hersteller verwendet werden.

Die Figuren und Beschreibung stellen nur Ausführungsbeispiele der Erfindung dar.

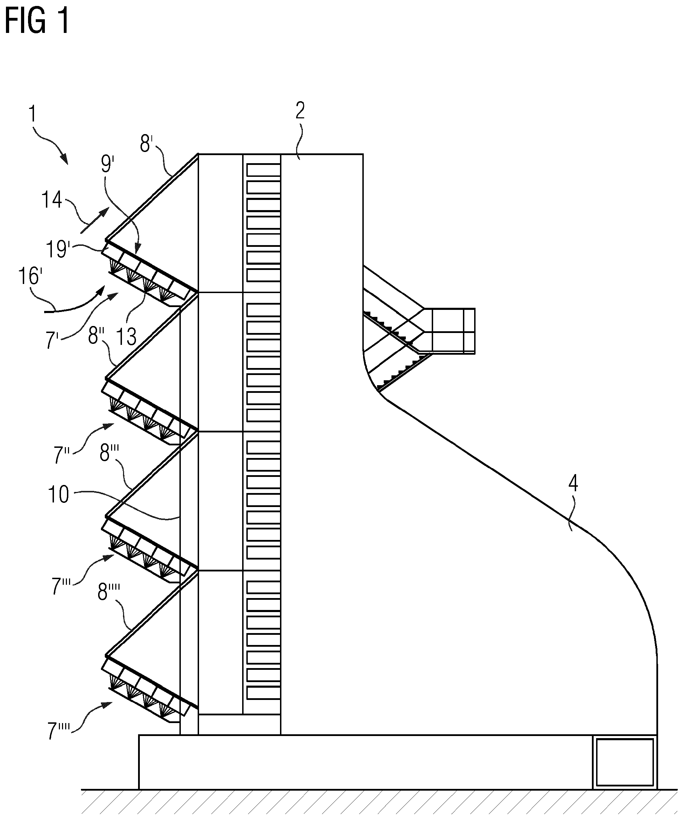

Figur 1 zeigt schematisch eine Kühlvorrichtung 1 mit einem Ansauggehäuse 4 für Luft.

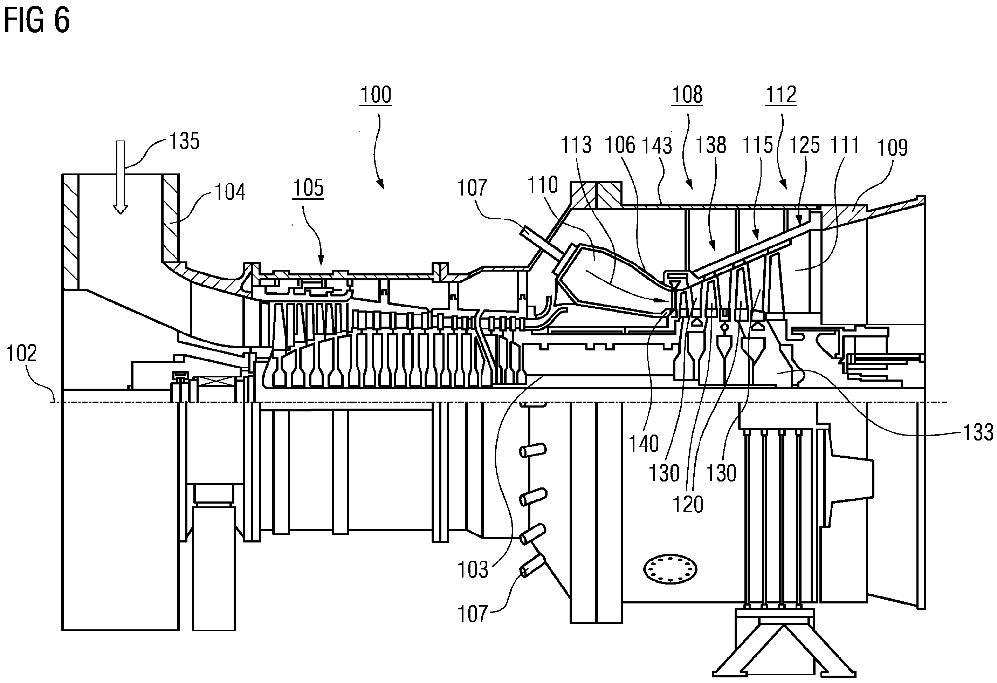

An ein Filtergehäuse 2 schließt sich das Ansauggehäuse 4 an. Die Kühlvorrichtung 1 ist vor dem Filtergehäuse 2, wie es insbesondere für eine Gasturbine 100 (Fig. 6) verwendet wird, angeordnet.

Das Filtergehäuse 2 weist Luftfilter auf, wie es aus dem Stand der Technik bekannt ist.

Die Kühlvorrichtung 1 besteht insbesondere aus mehreren Modulen 7', 7", ..., kann aber auch nur ein Modul 7' aufweisen.

Die Module 7', 7" sind insbesondere wie folgt aufgebaut:
Im Längsquerschnitt ist das Modul 7', ... insbesondere dreieckförmig ausgebildet.

Das Modul 7', 7" weist eine obere Abdeckung 8', 8'', 8‴, ... auf, die an einem Ende mit dem Filtergehäuse 2 verbunden ist und sich unter einem Winkel <90° zur Vertikalen nach unten (Fundament) erstreckt.

An das andere Ende der oberen Abdeckung 8', 8", ... ist ein flächiger Einströmbereich 9' angeordnet, der wiederum mit dem Filtergehäuse 2 verbunden ist und so die Dreiecksform bildet.

Umgebungsluft strömt über den Einströmbereich 9' ein.

Dies ist aus dem Stand der Technik bekannt.

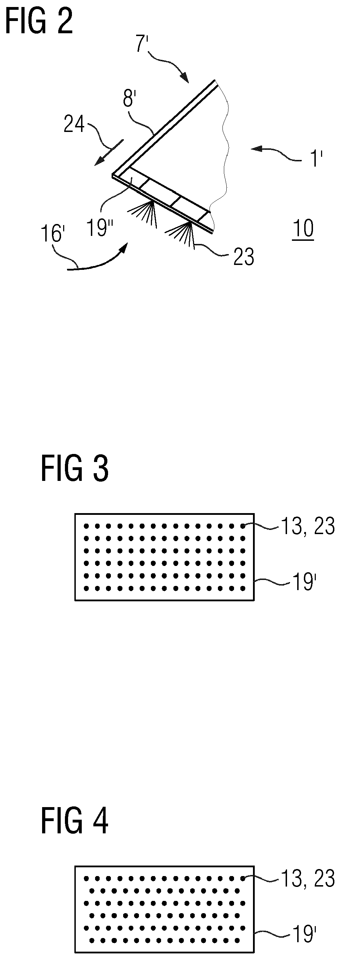

Im Einströmbereich 9' sind jedoch erfindungsgemäß als äußerstes mehrere Düsen 13 vorhanden, die insbesondere flächig über den Einströmbereich 9" verteilt sind (Fig. 3, 4).

Eine Wasserversorgung 10 versorgt die Düsen 13 mit Wasser. Die Wasserversorgung 10 versorgt ggfs. auch andere Module 7" 7‴, ....

Die Module 7', 7", ... sind vorzugsweise übereinander angeordnet.

In Einströmrichtung 16 der Luft von außen in das Filtergehäuse 2 ist nach mehreren Düsen 13 erfindungsgemäß ein Gitter 19' vorhanden.

Die Düsen 13 spritzen fein verteilt Wasser auf das Gitter 19, währenddessen die Luft an den Düsen 13 vorbei und durch das Gitter 19' strömt.

Dadurch werden oben beschriebene Effekte und Vorteile erreicht.

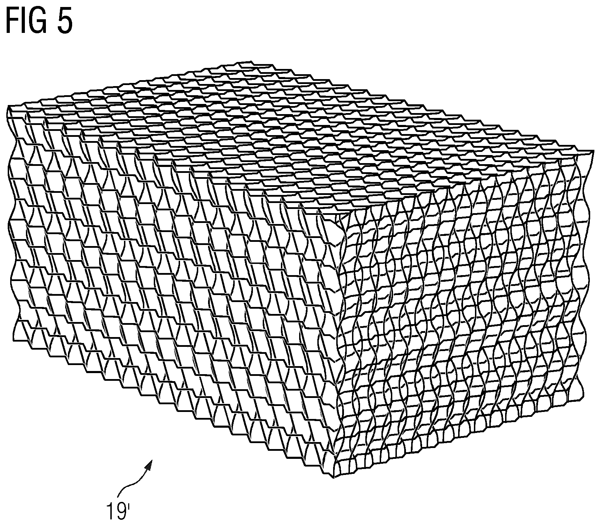

Das Gitter 19' wie z.B. in Figur 5 ist vorzugsweise aus Polypropylen (PP) aufgebaut und weist vorzugsweise eine kreuzdiagonale und vertikale Gitter Struktur auf, so dass sich keine Tropfen bilden und in den Ansaugtrakt mitgerissen werden.

Figur 2 zeigt eine modifizierte Kühlvorrichtung 1'.

In Figur 1 ist die Sprührichtung des Wassers aus den Düsen 13 in Einströmrichtung 14 gegeben. Die Figur 2 zeigt jedoch eine Anordnung, bei der Düsen 23 im Vergleich zu Figur 1 quasi umgedreht sind und entgegen der Einströmrichtung 16, also in Richtung 24, das Wasser sprühen.

Somit strömt die Luft, die angesaugt wird, in Richtung 16 entgegen der Ausströmrichtung 24 des Wassers aus den Düsen 23 in und durch das Gitter 19' und dann ins Ansauggehäuse 4 über den Filterbereich 2.

Die Anordnung gemäß Figur 1 oder 2 ist, wie leicht ersichtlich, bei Neuanlagen direkt installierbar, aber auch nachrüstbar. Dies kann während des Betriebs einer vorhandenen Gasturbine erfolgen ohne längere Abstellung des Betriebs.

In Wüstenregionen und Aufstellorten mit hoher Staubbelastung führt die Kühlvorrichtung auch zu einer Reinigung der Ansaugluft und Erhöhung der Filterstandzeit infolge der Auswaschung der Staubpartikel durch das eingespritzte Wasser.

Figur 3 und Figur 4 zeigen, wie die Düsen 13, 23 flächig verteilt sind.

Die Düsen 13, 23 können in Reihen senkrecht und waagerecht verlaufen und haben nach rechts bzw. links und nach unten bzw. oben den gleichen Abstand zueinander (Fig. 3).

Die Düsen 13, 23 können auch versetzt zueinander angeordnet sein (Fig. 4).

Die Figur 6 zeigt beispielhaft eine Gasturbine 100 in einem Längsteilschnitt, für die 100 die Erfindung benutzt werden kann.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 4, 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längs gerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium).

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Gasturbine (100),
die ein Filtergehäuse (2) mit Luftfiltern aufweist, sowie aufweisend eine Kühlvorrichtung (1) zur Kühlung der Ansaugluft eines Ansauggehäuses (4),
wobei die Kühlvorrichtung (1, 1') zumindest aufweist:
mehrere Düsen (13, 23) und
ein Gitter (19'),
die zusammen in einem Modul (7') angeordnet sind,
eine Wasserversorgung (10) für die Düsen (13, 23),
wobei in einer geplanten Einströmrichtung (16) von Luft die Düsen (13, 23) strömungstechnisch gesehen zuerst angeordnet sind,
wobei die Düsen (13, 23) in einer Ausspritzrichtung (14, 24) Wasser fein ausspritzen können und
dann in Einströmrichtung (16') das Gitter (19', ...) angeordnet ist
**dadurch gekennzeichnet, dass** die Kühlvorrichtung (1) vor dem Filtergehäuse (2) angeordnet ist.

2. Gasturbine nach Anspruch 1,
bei der Düsen (13) vorhanden sind,
die in der Einströmrichtung (16') der Luft in das Modul (7', ...) in einer ersten Ausspritzrichtung (14) Wasser ausspritzen können.

3. Gasturbine nach Anspruch 1 oder 2,
bei der Düsen (23) vorhanden sind,
die entgegen der Einströmrichtung (16') der Luft in das Modul (7', ...) in einer zweiten Ausspritzrichtung (24) Wasser ausspritzen können.

4. Gasturbine nach einem oder mehreren der Ansprüche 1, 2 oder 3, wobei die Kühlvorrichtung aus mehreren Modulen (7', 7", ...) die jeweils mehrere Düsen und ein Gitter umfassen, insbesondere übereinander, aufgebaut ist.

5. Gasturbine nach einem oder mehreren der Ansprüche 1, 2, 3 oder 4,
bei der mehrere Düsen (13, 23) flächig über das Gitter (19') verteilt sind.

6. Gasturbine nach einem oder mehreren der Ansprüche 1, 2, 3, 4 oder 5,
bei dem das dreidimensionale Gitter (19') eine Tröpfchenbildung verhindert und
insbesondere eine kreuzdiagonale und vertikale Struktur aufweist.

7. Verfahren zum Betreiben einer Gasturbine (100),
nach Anspruch 1 bis 6,
bei dem Düsen (13, 23) verwendet werden,
die Wasser verspritzen,
währenddessen Luft in Anströmrichtung (16) durch ein Gitter (19') strömt

8. Verfahren nach Anspruch 7,
bei dem eine Nassverdichtung beim Betreiben der Gasturbine (100) verwendet wird.

9. Verfahren nach Anspruch 7 oder 8
bei dem Leitungswasser durch die Düsen (13, 23) verspritzt wird.

10. Verfahren zur Veränderung einer Gasturbine,
bei der eine Kühlvorrichtung (1) nachträglich eingebaut wird, um eine Gasturbine nach einem oder mehreren der Ansprüche 1, 2, 3, 4, 5 oder 6 zu erhalten.

## Claims

1. Gas turbine (100)
having a filter housing (2) with air filters, and having a cooling device (1) for cooling the intake air of an intake housing (4),
wherein the cooling device (1, 1') comprises at least:
a plurality of nozzles (13, 23) and
a grid (19'),
which are arranged together in a module (7'),
a water supply (10) for the nozzles (13, 23),
wherein the nozzles (13, 23) are arranged first in terms of flow in a planned inflow direction (16) of air,
wherein the nozzles (13, 23) can finely spray water in an ejection direction (14, 24) and
the grid (19', ...) is then arranged in the inflow direction (16'), **characterized in that** the cooling device (1) is arranged in front of the filter housing (2).

2. Gas turbine according to Claim 1,
in which there are nozzles (13)
which can spray water in the inflow direction (16') of the air into the module (7', ...) in a first ejection direction (14).

3. Gas turbine according to Claim 1 or 2,
in which there are nozzles (23)
which can spray water counter to the inflow direction (16') of the air into the module (7', ...) in a second ejection direction (24).

4. Gas turbine according to one or more of Claims 1, 2 or 3,
wherein the cooling device is constructed from a plurality of modules (7', 7'', ...), each of which comprises a plurality of nozzles and a grid,
in particular one above the other.

5. Gas turbine according to one or more of Claims 1, 2, 3 or 4,
in which a plurality of nozzles (13, 23) is distributed over the area of the grid (19').

6. Gas turbine according to one or more of Claims 1, 2, 3, 4 or 5,
in which the three-dimensional grid (19') prevents droplet formation and
has, in particular, a diagonally crossed and vertical structure.

7. Method for operating a gas turbine (100)
according to Claims 1 to 6,
in which use is made of nozzles (13, 23)
which spray water
while air flows through a grid (19') in the inflow direction (16).

8. Method according to Claim 7,
in which wet compression is used when operating the gas turbine (100).

9. Method according to Claim 7 or 8,
in which plain water is sprayed through the nozzles (13, 23).

10. Method for modifying a gas turbine,
in which a cooling device (1) is retrofitted so as to obtain a gas turbine according to one or more of Claims 1, 2, 3, 4, 5 or 6.

## Revendications

1. Turbine (100) à gaz,
qui a une enveloppe (2) de filtre ayant des filtres à air, ainsi qu'ayant un dispositif (1) de refroidissement pour le refroidissement de l'air d'aspiration d'une enveloppe (4) d'aspiration,
dans laquelle le dispositif (1, 1') a au moins :
plusieurs buses (13, 23) et
une grille (19'),
qui sont disposées ensemble dans un module (7'),
une alimentation (10) en eau des buses (13, 23),
dans laquelle, dans une direction (16) d'entrée prévue de l'air, les buses (13, 23) sont, considéré en technique des fluides, montées en premier,
dans laquelle les buses (13, 23) peuvent pulvériser finement de l'eau dans une direction (14, 24) de pulvérisation, et
ensuite, dans une direction (16') d'entrée est montée la grille (19', ...),
**caractérisée en ce que** le dispositif (1) de refroidissement est monté avant l'enveloppe (2) de filtre.

2. Turbine à gaz suivant la revendication 1,
dans laquelle il y a des buses (13),
qui peuvent pulvériser de l'eau dans une première direction (14) de pulvérisation dans la direction (16') d'entrée de l'air dans le module (7', ...).

3. Turbine à gaz suivant la revendication 1 ou 2,
dans laquelle il y a des buses (23),
qui peuvent pulvériser de l'eau dans une deuxième direction (24) de pulvérisation contraire à la direction (16') de l'air dans le module (7', ...).

4. Turbine à gaz suivant l'une ou plusieurs des revendications 1, 2 ou 3,
dans laquelle le dispositif de refroidissement est composé de plusieurs modules (7', 7'', ...), qui ont chacun plusieurs buses et une grille, en étant en particulier superposés.

5. Turbine à gaz suivant l'une ou plusieurs des revendications 1, 2, 3 ou 4,
dans laquelle plusieurs buses (13, 23) sont réparties en surface sur la grille (19').

6. Turbine à gaz suivant l'une ou plusieurs des revendications 1, 2, 3, 4 ou 5,
dans laquelle la grille (19') en trois dimensions empêche une formation de gouttelettes et
a, en particulier, une structure en diagonale en croix et verticale.

7. Procédé pour faire fonctionner une turbine (100) à gaz suivant la revendication 1 à 6,
dans lequel on utilise des buses (13, 23),
qui pulvérisent de l'eau, tandis que de l'air passe dans la direction (16) d'entrée à travers une grille (19').

8. Procédé suivant la revendication 7,
dans lequel on utilise une compression humide lors du fonctionnement de la turbine (100) à gaz.

9. Procédé suivant la revendication 7 ou 8,
dans lequel on pulvérise de l'eau de réseau par les buses (13, 23) .

10. Procédé de modification d'une turbine à gaz,
dans lequel on monte ultérieurement le dispositif (1) de refroidissement afin d'obtenir une turbine à gaz suivant l'une ou plusieurs des revendications 1, 2, 3, 4, 5 ou 6.
